(19) Europäisches Patentamt
European Patent Office
Office européen des brevets

(11) **EP 1 841 258 A1**

(12) **EUROPEAN PATENT APPLICATION**

(43) Date of publication:
**03.10.2007 Bulletin 2007/40**

(51) Int Cl.:
*H04Q 7/38* (2006.01)  *H04L 12/56* (2006.01)

(21) Application number: **06252786.6**

(22) Date of filing: **30.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **30.03.2006 JP 2006093656**

(71) Applicant: **FUJITSU LIMITED**
**Kawasaki-shi,**
**Kanagawa 211-8588 (JP)**

(72) Inventors:
 • **Seki, Hiroyuki**
 **c/o Fujitsu Limited**
 **Kawasaki-shi, Kanagawa 211-8588 (JP)**

• **Takeo, Kohji**
 **c/o Mobile Techno Corp.**
 **Kawasaki-shi, Kanagawa 212-0013 (JP)**

(74) Representative: **Stebbing, Timothy Charles et al**
 **Haseltine Lake**
 **Lincoln House**
 **300 High Holborn**
 **London WC1V 7JH (GB)**

Remarks:
 Amended claims in accordance with Rule 86 (2) EPC.

(54) **Communication apparatus**

(57) A communication apparatus (1) for a base station of a wireless network that enhances throughput even in a multi-cell environment without limiting a frequency band which can be used in each cell. A classification section (1a) divides terminals (2a, 2b, 2c, 2d, 2e) in a cell into classes (2a, 2b; 2c, 2d, 2e). A channel information receiving section (1b) receives channel information according to a plurality of frequency bands from each terminal. A scheduling section (1c) assigns the plurality of frequency bands the number of which is determined according to the classes to the terminals in descending order of priority of class on the basis of the channel information received by the channel information receiving section (1b).

FIG. 1

EP 1 841 258 A1

## Description

This invention relates to a communication apparatus and, more particularly, to a communication apparatus for performing communication by assigning a plurality of frequency bands to terminals, for example in a packet-based cellular radio network.

With a radio transmission system, a base station selects a terminal to which a signal is sent and sends the signal to the terminal selected. With circuit switching, a frequency/channel (in the case of a frequency division access system) or a code (in the case of a code division access system) is assigned to a terminal. Assuming that movement from cell to cell or dynamic frequency assignment is not taken into consideration, the communication line is maintained until communication with the terminal terminates. With packet transmission, a terminal can be assigned to each packet. Accordingly, it is important to effectively assign a terminal to each packet. This terminal selection function is referred to as a scheduler.

The scheduler determines assignment of terminals to packets on the basis of channel information sent from each terminal. In this case, quality or a transmission rate required by each terminal, the amount of data received in the past by each terminal (or communication time during which each terminal has communicated), or the like may be taken into consideration. With a system using adaptive modulation, an optimum transmission rate can be set on the basis of channel information (such as the distance between a terminal and a base station or a fading state) and a scheduler is also used. With communication performed by using a plurality of frequency bands, the function of a scheduler is more complicated.

There are two methods for performing communication by using a plurality of frequency bands. One method is to perform communication by using a plurality of discrete frequency bands. The other method is to perform communication by using several subbands obtained by dividing one wide band.

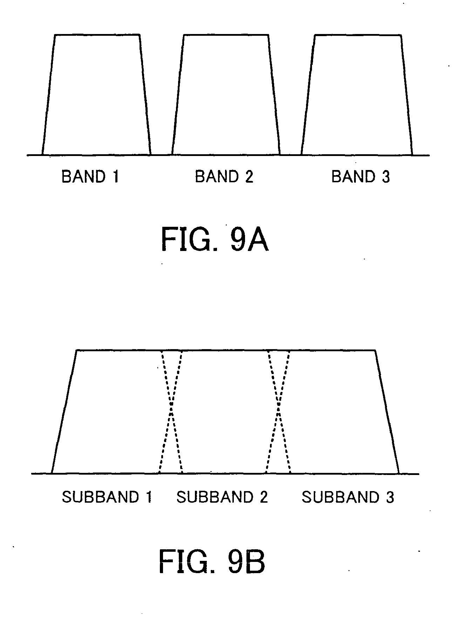

Figs. 9A and 9B are views for describing communication frequency bands. In Fig. 9A, communication is performed by using a plurality of discrete frequency bands. In Fig. 9B, communication is performed by using three subbands obtained by dividing one band. In the case of orthogonal frequency division multiplexing (OFDM), each band can be considered as a set of OFDM subcarriers. In this case, there is no need to use adjacent subcarriers. A combination of discrete subcarriers can be considered as one band.

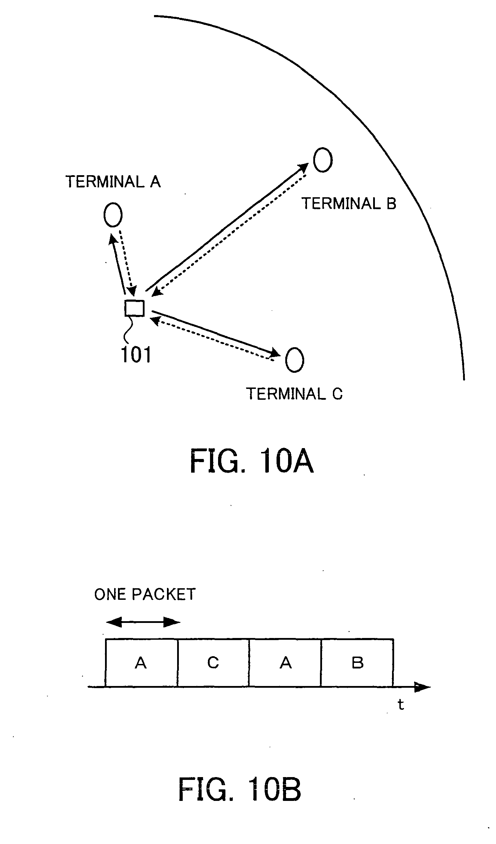

An overview of a scheduler will now be given. Figs. 10A and 10B are views for giving an overview of a scheduler. In Fig. 10A, a base station 101 and terminals A through C are shown. As shown in Fig. 10A, it is assumed that the terminals A through C are in a cell under the control of the base station 101.

In Fig. 10B, how to assign packets to the terminals A through C is shown. As shown in Fig. 10B, the base station 101 assigns individual packets to the terminals A through C in accordance with the scheduler to send data.

The base station 101 uses packets not only for sending data signals to the terminals A through C but also for informing the terminals A through C of signals, such as pilot signals, common thereto. When the terminals A through C receive the packets sent thereto, the terminals A through C demodulate the signals included in the packets.

Even if packets are not sent to the terminals A through C, the terminals A through C use pilot signals for determining channel information and inform the base station 101 of the channel information via the uplink. The scheduler in the base station 101 determines one of the terminals A through C to be assigned to the next packet on the basis of the channel information sent from the terminals A through C.

Several algorithms used by a scheduler for assigning the terminals A through C to packets have been proposed. Basic algorithms are the round robin (RR) algorithm, the proportional fairness (PF) algorithm, and the maximum carrier to interface power ratio (Max CIR) algorithm. With the RR algorithm, the terminals A through C are assigned to packets in order regardless of the channel information of which the base station 101 is informed. Equal assignment is performed among the terminals A through C. However, the channel information is not used, so system throughput drops. With the PF algorithm, the differential between an average signal to interface and noise ratio (SINR) value and an instantaneous SINR value for each of the terminals A through C is used. Accordingly, the difference in propagation attenuation among the terminals A through C becomes smaller. In this case, it is possible to achieve equality among the terminals A through C while maintaining comparatively high throughput. With the Max CIR algorithm, one of the terminals A through C channel information for which is the highest (the one of the terminals having the highest carrier-to-interference ratio) is assigned to a packet. A signal is sent to one of the terminals A through C for which an SINR value on a current propagation path is the highest, so higher throughput can be obtained. However, an SINR value for the terminal B which is distant from the base station 101 is low because of propagation attenuation, so the probability of the terminal B being assigned to a packet is very low. That is to say, there is inequality among the terminals A through C. Which algorithm to select depends on what precedes as reference for evaluating a system.

If the same frequency band is used in adjacent cells in a cellular system, communication quality deteriorates because of adjacent-cell interference. With the above communication system using a plurality of frequency bands, a method for avoiding adjacent-cell interference is proposed.

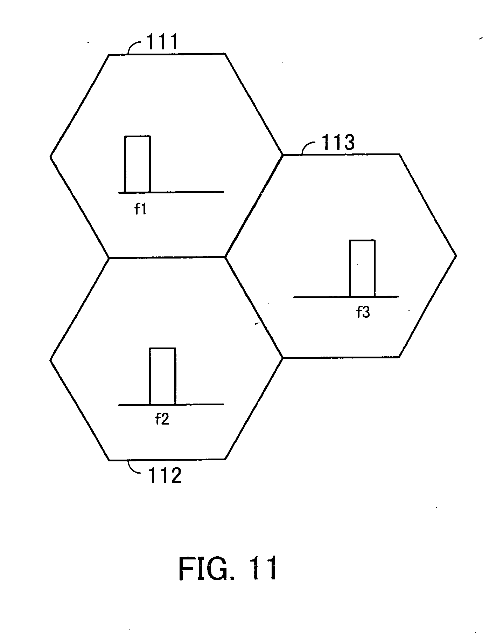

Fig. 11 is a view for describing a frequency reuse system. In this example, a frequency reuse factor is three.

In adjacent cells 111 through 113, different frequency bands are used for performing communication. Therefore, the system shown in Fig. 11 is also referred to as a three-cell reuse system. The same frequency band is not used in these adjacent cells, but is used in a cell one cell away. This reduces interference from an external cell. However, the number of frequency bands which can be used in one cell decreases to a third, so efficiency in user assignment falls because of division loss. In addition, it is difficult to regularly arrange cells in an actual environment, so reuse efficiency may fall.

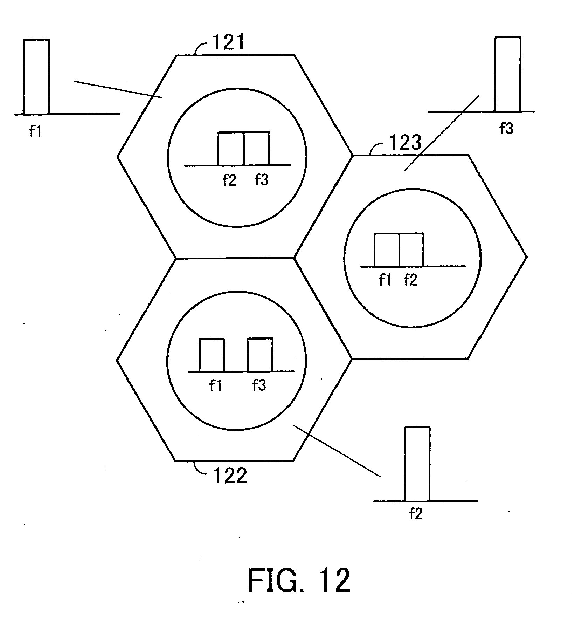

Fig. 12 is a view for describing a soft reuse system. As shown in Fig. 12, each of cells 121 through 123 is divided into an inner area (enclosed with a circle) and an outer area. Different frequency bands f1, f2, and f3 are used in the outer areas of the cells 121 through 123, respectively. Frequency bands used in the inner area of each of the cells 121 through 123 differ from a frequency band used in the outer area.

In the inner areas of the cells 121 through 123, adjacent-cell interference is low and the power of a signal received is high. Accordingly, the same frequency band that is used in an adjacent cell can be used and sending power can be lowered. In the outer areas of the cells 121 through 123, adjacent-cell interference is high and the power of a signal received is low. Therefore, as stated above, a frequency band that is not used in an adjacent cell is used.

If sending power for two frequency bands used in each inner area is equal to sending power for a frequency band used in each outer area, then this system corresponds to a system with a frequency reuse factor of one in which the same frequency bands are reused in all of the cells 121 through 123. If sending power for two frequency bands used in each inner area is zero (sending is not performed), then this system corresponds to a system with a frequency reuse factor of three. By controlling sending power, a frequency reuse coefficient can be changed. Accordingly, this system is referred to as a soft reuse system. However, cells are not always arranged regularly. Moreover, terminal distribution differs among different cells and changes with time. Therefore, it is difficult to set a soft reuse coefficient most suitable for the entire system.

The simplest method for scheduling a communication system using a plurality of frequency bands is to limit the number of frequency bands in which each terminal can communicate to one and to make schedulers operate independently of one another according to frequency bands. For example, it is assumed that frequency bands used by terminals A through C, terminals D through F, and terminals G through I are fixed at f1, f2, and f3 respectively. This assignment of the frequency bands is set at the beginning of communication. A scheduler for the frequency band f1 determines one of the terminals A through C to which a signal is to be sent by using the next packet in the frequency band f1 on the basis of channel information sent from the terminals A through C. A scheduler for the frequency band f2 determines one of the terminals D through F to which a signal is to be sent by using the next packet in the frequency band f2 on the basis of channel information sent from the terminals D through F. A scheduler for the frequency band f3 determines one of the terminals G through I to which a signal is to be sent by using the next packet in the frequency band f3 on the basis of channel information sent from the terminals G through I.

With this method, each terminal determines a receiving SINR value in one frequency band set at the beginning of communication and feeds back only this information to a base station. As a result, the amount of the channel information is small. However, the number of terminals per frequency band reduces, so efficiency in frequency use falls.

A method for using all frequency bands for scheduling has been proposed (see, for example, Shirakabe et al., "Evaluation of Concatenated Scheduling for CDMA System", The Institute of Electronics, Information and Communication Engineers (IEICE) Communications Society Conference 2005, B-5-99).

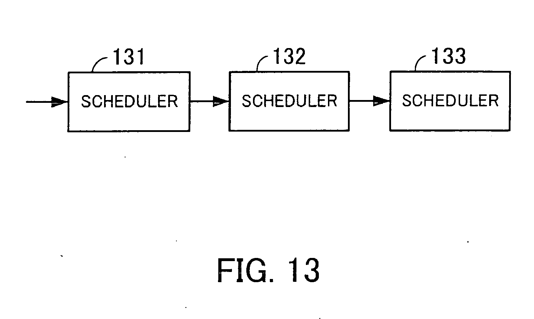

Fig. 13 is a view for describing concatenated scheduling. As shown in Fig. 13, in Shirakabe et al., "Evaluation of Concatenated Scheduling for CDMA System", The Institute of Electronics, Information and Communication Engineers (IEICE) Communications Society Conference 2005, B-5-99, schedulers 131 through 133 are connected in series. The scheduler 131 performs scheduling on all terminals in a cell in a frequency band f1. It is assumed that the number of terminals in the cell on which scheduling is to be performed is N. The scheduler 131 performs scheduling on the N terminals and determines one terminal to which a signal is to be sent by the next packet in the frequency band f1. The scheduler 132 then performs scheduling on the remaining (N-1) terminals and determines a terminal to which a signal is to be sent in a frequency band f2. Similarly, the scheduler 133 performs scheduling on the remaining (N-2) terminals and determines a terminal to which a signal is to be sent in a frequency band f3. Each terminal must inform a base station of channel information corresponding to all of the frequency bands. However, this prevents loss which otherwise will be caused by the division of a frequency band according to schedulers, and frequencies can be used efficiently. In addition, the schedulers 131 through 133 may adopt different algorithms.

A frequency assignment method in a communication system which reduces interference on a base station that belong to another operator and the power consumption and unit size of a sending section included in a terminal station without making standards for the adjacent-channel leakage power of a signal sent from the terminal station strict has conventionally been proposed (see, for example, Japanese Patent Laid-Open Publication No. Heill-355838).

With the above frequency reuse system or soft reuse system, however, frequency bands used in adjacent cells must be set in advance. Accordingly, a frequency band which can be used in each cell is limited and maximum throughput which can be obtained in each cell is low.

Furthermore, in Shirakabe et al., "Evaluation of Concatenated Scheduling for CDMA System", IEICE Communications Society Conference 2005, B-5-99, all frequency bands are used for scheduling. However, the influence of interference from other cells in a multi-cell environment is not taken into consideration.

The present invention was made under the background circumstances described above. An embodiment of the present invention can provide a communication apparatus that can enhance throughput even in a multi-cell environment without limiting a frequency band which can be used in each cell.

In the present invention, a communication apparatus which assigns a plurality of frequency bands to terminals for performing communication is provided. This communication apparatus comprises a classification section for dividing the terminals in a cell into classes, a channel information receiving section for receiving channel information according to the plurality of frequency bands from the terminals, and a scheduling section for assigning the plurality of frequency bands the number of which is determined according to the classes to the terminals in descending order of priority of class on the basis of the channel information.

The above and other features and advantages of the present invention will become apparent from the following description when taken in conjunction with the accompanying drawings which illustrate preferred embodiments of the present invention by way of example, and in which:

Fig. 1 is a view for giving an overview of a communication apparatus according to the present invention.

Fig. 2 shows an example of the system configuration of a communication apparatus according to the present invention.

Fig. 3 shows packets sent or received by the communication apparatus.

Fig. 4 is a view for describing cells.

Fig. 5 shows an example of the data structure of a schedule table.

Fig. 6 is a functional block diagram of the communication apparatus.

Fig. 7 is a flow chart showing the scheduling operation of the communication apparatus.

Fig. 8 is a view for describing a change in sending power.

Figs. 9A and 9B are views for describing communication frequency bands.

Figs. 10A and 10B are views for giving an overview of a scheduler.

Fig. 11 is a view for describing a frequency reuse system.

Fig. 12 is a view for describing a soft reuse system.

Fig. 13 is a view for describing concatenated scheduling.

The principles underlying the present invention will now be described in detail with reference to the drawings.

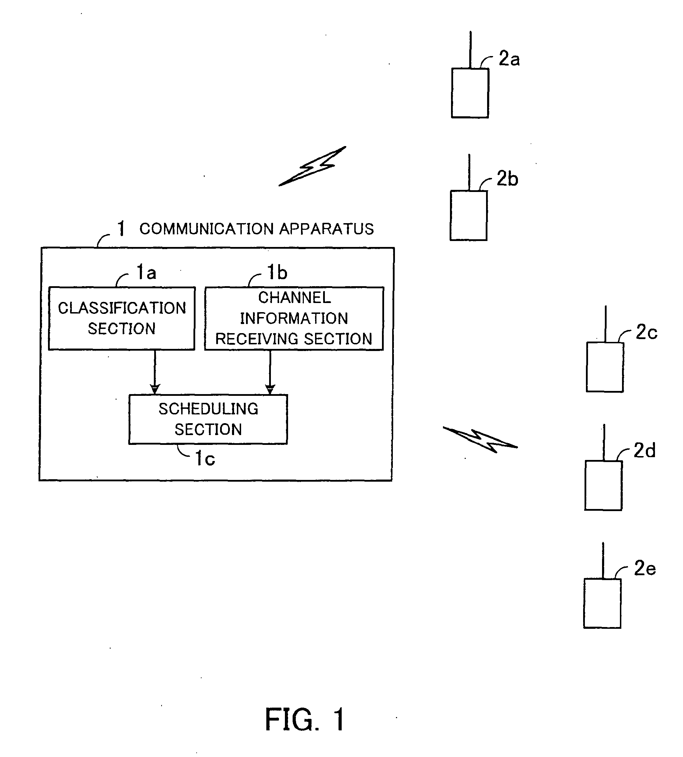

Fig. 1 is a view for giving an overview of a communication apparatus according to the present invention. A communication apparatus 1 comprises a classification section 1a, a channel information receiving section 1b, and a scheduling section 1c. The communication apparatus 1 assigns a plurality of frequency bands to terminals 2a through 2e for performing communication. It is assumed that the plurality of frequency bands are f1 through f3.

The classification section 1a divides the terminals 2a through 2e in a cell into classes. For example, the classification section 1a divides the cell into two areas one of which is near to the communication apparatus 1 and the other of which is distant from the communication apparatus 1, and divides the terminals 2a through 2e into classes on the basis of which area they are in. It is assumed that the terminals 2a and 2b belong to a class C1 (the terminals 2a and 2b are in the area which is near to the communication apparatus 1) and that the terminals 2c through 2e belong to a class C2 (the terminals 2c through 2e are in the area which is distant from the communication apparatus 1).

The channel information receiving section 1b receives channel information according to frequency bands f1 through f3 from the terminals 2a through 2e.

The scheduling section 1c assigns frequency bands, the number of which is determined according to the individual classes, to the terminals in descending order of priority of class on the basis of the channel information according to frequency bands f1 through f3 sent from the terminals 2a through 2e.

The priority of the classes C1 and C2 and the number of frequency bands f1 through f3 assigned to the classes C1 and C2 is set in advance by, for example, a system. A terminal which belongs to the class C2 is distant from the communication apparatus 1. As a result, usually the power of a signal received is low and interference from an adjacent cell is high. Accordingly, an SINR value is small and the probability of the frequency band f1, f2, or f3 being assigned to the terminal 2c, 2d, or 2e is low. To enhance throughput for the class C2, the number of frequency bands assigned to the class C2 is set to two and the number of frequency bands assigned to the class C1 is set to one. The number of frequency bands assigned to the class C1 is one, so throughput for the class C1 is low. Therefore, the priority of the class C1 is made higher than that of the class C2.

In this case, the scheduling section 1c assigns one of the frequency bands f1, f2, and f3 to the terminal 2a or 2b of the class C1 the priority of which is high on the basis of the channel information received from the terminals 2a through 2e. The channel information is, for example, the SINR values in the frequency bands f1, f2, and f3 of the terminals 2a through 2e. The scheduling section 1c assigns one of the frequency bands f1, f2, and f3 to a terminal an SINR value for which is the highest. It is assumed that an SINR value in the frequency band f1 for the terminal 2a is the highest. Then the scheduling section 1c assigns the frequency band f1 to the terminal 2a which belongs to the class C1.

The scheduling section 1c then assigns two of the frequency bands f1, f2, and f3 to terminals 2c through 2e of the class C2 the priority of which is low on the basis of the channel information received from the terminals 2a through 2e. The frequency band f1 is already assigned to the terminal 2a of the class C1 the priority of which is high, so the scheduling section 1c assigns the frequency bands f2 and f3 to terminals2c through 2e of the class C2. As stated above, the channel information is, for example, SINR values in the frequency bands f1, f2, and f3 for the terminals 2a through 2e. The scheduling section 1c assigns the frequency bands f2 and f3 to terminals2c through 2e SINR values for which are the highest. It is assumed that an SINR value for the terminal 2c is the highest in the frequency band f2 and that an SINR value for the terminal 2d is the highest in the frequency band f3. Then the scheduling section 1c assigns the frequency bands f2 and f3 to the terminals 2c and 2d, respectively, which belong to the class C2.

As described above, the communication apparatus 1 divides the terminals 2a through 2e into the classes C1 and C2 and assigns frequency bands of f1, f2, and f3 the number of which is determined according to classes C1 and C2 to the terminals in descending order of priority of class on the basis of the channel information. As a result, by properly determining the priority of the classes C1 and C2 and the number of frequency bands assigned to the classes C1 and C2, throughput can be enhanced even in a multi-cell environment. In this case, frequency bands which can be used in each cell are not limited.

The above priority of the classes C1 and C2 and the above number of frequency bands f1 through f3 assigned to the classes C1 and C2 are examples and are changed according to the state of communication or specifications for a system which a user wants to build.

Embodiments of the present invention will now be described in detail with reference to the drawings.

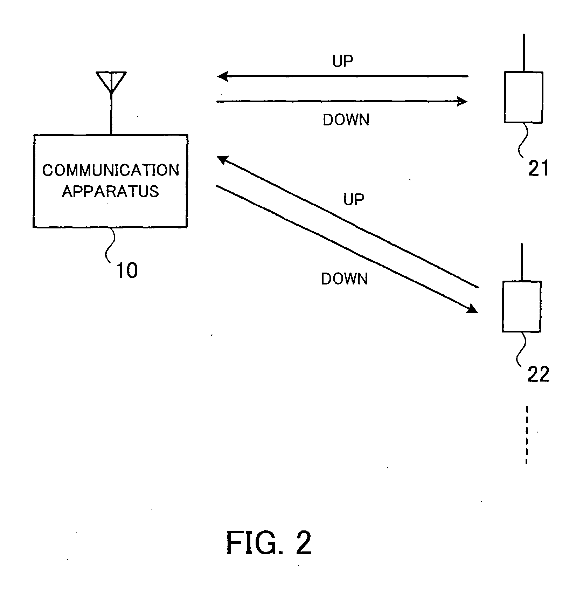

Fig. 2 shows an example of the system configuration of a communication apparatus according to the present invention. In Fig. 2, a communication apparatus 10 located in a base station and terminals 21, 22, etc. are shown. The communication apparatus 10 communicates with the terminals 21, 22, etc. by using a plurality of frequency bands.

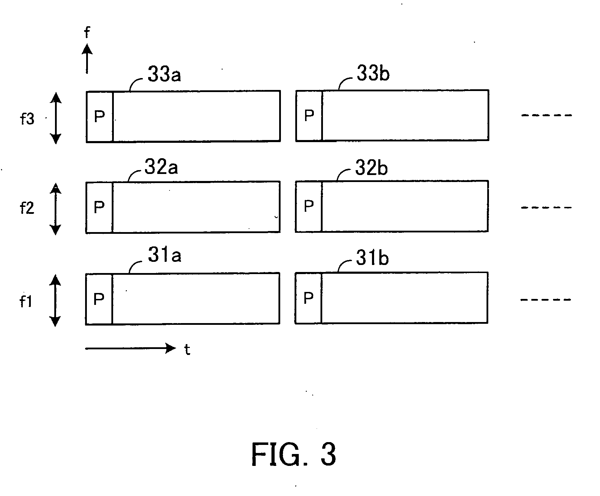

Fig. 3 shows packets sent or received by the communication apparatus. As shown in Fig. 3, the communication apparatus 10 sends or receives packets 31a, 31b, etc., packets 32a, 32b, etc., packets 33a, 33b, etc., and the like by using frequency bands f1 through f3.

The communication apparatus 10 assigns the terminals 21, 22, etc. to the packets 31a, 31b, etc. in the frequency band f1, the packets 32a, 32b, etc. in the frequency band f2, the packets 33a, 33b, etc. in the frequency band f3, and the like by a scheduler. In Fig. 3, a horizontal direction indicates the elapse of time and a vertical direction indicates a frequency.

Each of the packets 31a, 31b, etc., the packets 32a, 32b, etc., the packets 33a, 33b, etc. and the like includes a pilot signal P. Each of the terminals 21, 22, etc. uses the pilot signal P for determining channel information and informs the communication apparatus 10 of the channel information via an uplink. The channel information is, for example, an SINR value, a value obtained by quantizing the SINR value, or transmission rate information corresponding to the SINR value. It is assumed that the channel information is an SINR value.

Cells will now be described.

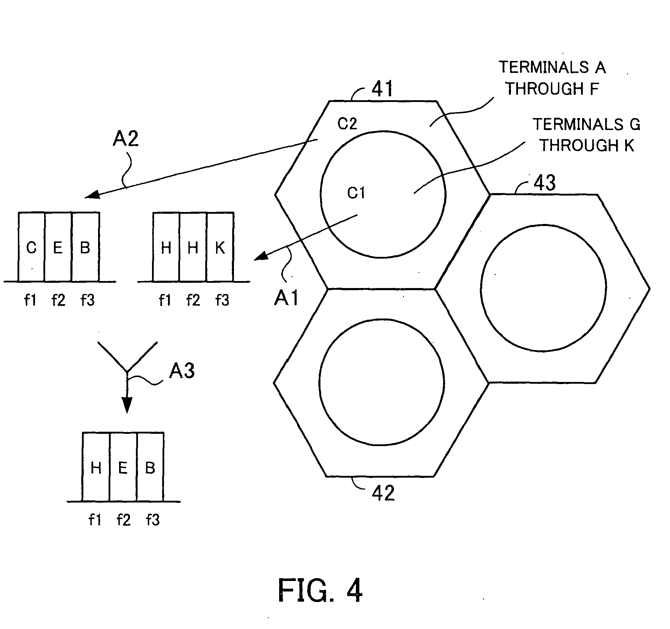

Fig. 4 is a view for describing cells. It is assumed that three communication apparatuses (base stations) 10 are provided and that the three communication apparatuses 10 build cells 41 through 43 as shown in Fig. 4.

Each of the cells 41 through 43 is divided into two areas: one inside a circle shown in Fig. 4 (inner area) and the other outside the circle shown in Fig. 4 (outer area). It is assumed that terminals which are in the inner area belong to a class C1 and that terminals which are in the outer area belong to a class C2.

Terminals are classified into one of the classes C1 and C2 on the basis of the distance to the communication apparatus 10. Each terminal can determine the distance to the communication apparatus 10 from, for example, the average power of a pilot signal received from the communication apparatus 10 and informs the communication apparatus 10 of the result. The communication apparatus 10 divides the terminals into classes on the basis of the distance to the communication apparatus 10. The position of each terminal can also be known by, for example, using the GPS or measuring packet delay time.

In an outer area in each of the cells 41 through 43, the power of a signal received from a base station is low and interference from an adjacent cell is high. Therefore, an SINR value is low and the probability of a packet being assigned to a terminal which is in an outer area by a scheduler is low. Even if a packet is sent, a transmission rate is low because an SINR value is low. With a system in which importance is given to equality among users, the throughput of a terminal which is in an outer area can be enhanced by raising the priority of the class C2. If importance is given to the average throughput of the entire cell, the priority of the class C1 should be raised. With a terminal which belongs to the class C1, the power of a signal received is high and a transmission rate is high.

As shown in Fig. 4, it is assumed that terminals A through F are in the outer area of the cell 41, that terminals G through K are in the inner area of the cell 41, and that frequency bands f1 through f3 are used. Each of the terminals A through K determines SINR values in the three frequency bands f1 through f3 and informs the communication apparatus 10 of them as channel information.

The communication apparatus 10 performs scheduling according to classes C1 and C2 and frequency bands f1 through f3 on the basis of the channel information received. For example, the communication apparatus 10 selects terminals which belong to the class C1 and SINR values for which are the highest in the frequency bands f1 through f3. As indicated by an arrow A1 in Fig. 4, it is assumed that an SINR value for the terminal H is the highest in the frequency band f1, that an SINR value for the terminal H is the highest in the frequency band f2, and that an SINR value for the terminal K is the highest in the frequency band f3.

Similarly, the communication apparatus 10 selects terminals which belong to the class C2 and SINR values for which are the highest in the frequency bands f1 through f3. As indicated by an arrow A2 in Fig. 4, it is assumed that an SINR value for the terminal C is the highest in the frequency band f1, that an SINR value for the terminal E is the highest in the frequency band f2, and that an SINR value for the terminal B is the highest in the frequency band f3.

It is assumed that the priority of the class C1 corresponding to the inner area is higher than the priority of the class C2 corresponding to the outer area and that two frequency bands are assigned to the class C2 corresponding to the outer area. By making the priority of the class C1 high, throughput in the inner area is enhanced. By assigning two frequency bands to the class C2, throughput in the outer area is enhanced and equality is maintained.

The priority of the class C1 is high, so the communication apparatus 10 selects a terminal an SINR value for which is the highest from the class C1. That is to say, the communication apparatus 10 selects a terminal an SINR value for which is the highest from the terminals H, H, and K which are indicated by the arrow A1 in Fig. 4 and the SINR values for which are the highest in the frequency bands f1 through f3 respectively. It is assumed that the SINR value in the frequency band f1 for the terminal H is the highest. Then the remaining frequency bands f2 and f3 are assigned to the class C2. Accordingly, the communication apparatus 10 selects the terminals E and B which are indicated by the arrow A2 in Fig. 4 and the SINR values for which are the highest in the frequency bands f2 and f3 respectively. An arrow A3 in Fig. 4 indicates the terminals H, E, and B assigned to the frequency bands f1 through f3, respectively, in the above way. The communication apparatus 10 performs scheduling in this way according to classes C1 and C2 and frequency bands f1 through f3 on the basis of the channel information received.

A schedule table generated by the communication apparatus 10 to perform scheduling will now be described.

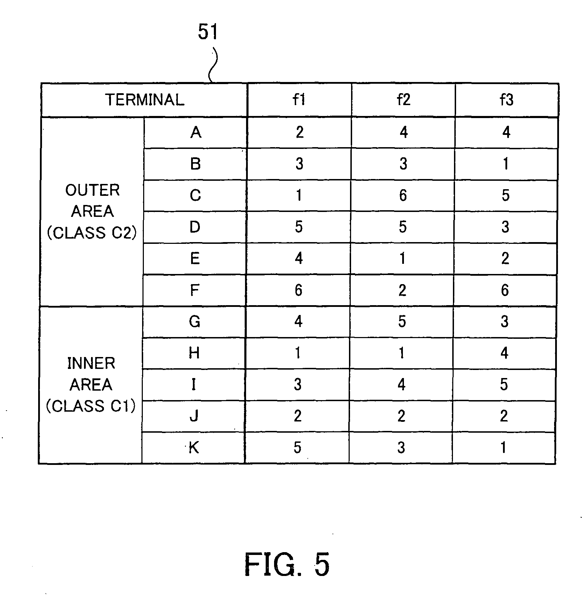

Fig. 5 shows an example of the data structure of a schedule table. As shown in Fig. 5, a schedule table 51 includes Terminal, Frequency Band f1, Frequency Band f2, and Frequency Band f3 columns.

The Terminal column is divided into Outer Area (Class C2) and Inner Area (Class C1) sections. The terminals A through F are stored in the Outer Area section of the Terminal column. The terminals G through K are stored in the Inner Area section of the Terminal column.

The order of each of the terminals A through K as to SINR values in the frequency bands f1 through f3 are stored in the Frequency Band f1, Frequency Band f2, and Frequency Band f3 columns. The SINR values (not shown) are also stored in the Frequency Band f1, Frequency Band f2, and Frequency Band f3 columns.

As stated above, the communication apparatus 10 in the cell 41, for example, obtains the distance to each of the terminals A through K and, as shown in the schedule table 51 in Fig. 5, stores the terminals A through F and the terminals G through K in the Outer Area section and the Inner Area section, respectively, of the Terminal column.

The communication apparatus 10 receives the SINR values in the frequency bands f1 through f3 from the terminals A through K. The communication apparatus 10 then calculates the order as to the SINR values for the terminals A through K according to classes C1 and C2 and stores the order and the SINR values in the schedule table 51.

In the schedule table 51 in Fig. 5, for example, the order of the terminals C, A, B, E, D, and F is obtained in the class C2 as to the SINR values in the frequency band f1. The order of the terminals H, J, I, G, and K is obtained in the class C1 as to the SINR values in the frequency band f1.

Similarly, the communication apparatus 10 in each of the cells 42 and 43 also generates its own schedule table 51.

Scheduling performed by the communication apparatus 10 will now be described. The communication apparatus 10 refers to the schedule table 51 for performing scheduling, that is to say, for assigning the frequency bands to terminals.

The priority of classes and the number of frequency bands assigned to each class are inputted in advance to the communication apparatus 10.

The communication apparatus 10 assigns frequency bands the number of which is inputted in advance to terminals of a class the priority of which is the highest in descending order of SINR value. The communication apparatus 10 then assigns frequency bands the number of which is inputted in advance to terminals of a class the priority of which is next highest in descending order of SINR value.

It is assumed that the priority of the class C1 is higher than the priority of the class C2 as a result of input provided in advance to the communication apparatus 10.

In addition, it is assumed that one frequency band and two frequency bands are assigned to the classes C1 and C2 respectively as a result of input provided in advance to the communication apparatus 10.

In this case, the priority of the class C1 is higher than the priority of the class C2, so the communication apparatus 10 selects the terminal having the highest SINR value from the Frequency Band f1, Frequency Band f2, or Frequency Band f3 column corresponding to the Inner Area section included in the schedule table 51. In the case of the example given in the schedule table 51, an SINR value for the terminal H is the highest in the frequency band f1, an SINR value for the terminal H is the highest in the frequency band f2, and an SINR value for the terminal K is the highest in the frequency band f3. The communication apparatus 10 selects a terminal an SINR value for which is the highest from among these terminals. It is assumed that an SINR value in the frequency band f1 for the terminal H is the highest and that the frequency band f1 is assigned to the terminal H.

The communication apparatus 10 then assigns the remaining frequency bands f2 and f3 to terminals of the class C2. The communication apparatus 10 refers to the schedule table 51 and assigns the frequency bands f2 and f3 to the terminals E and B respectively.

A frequency band in which a greater SINR value is obtained is assigned to a class of higher priority in this way. Therefore, compared with the case where fixed frequency bands are used, frequencies can be used efficiently.

The functional blocks of the communication apparatus 10 will now be described.

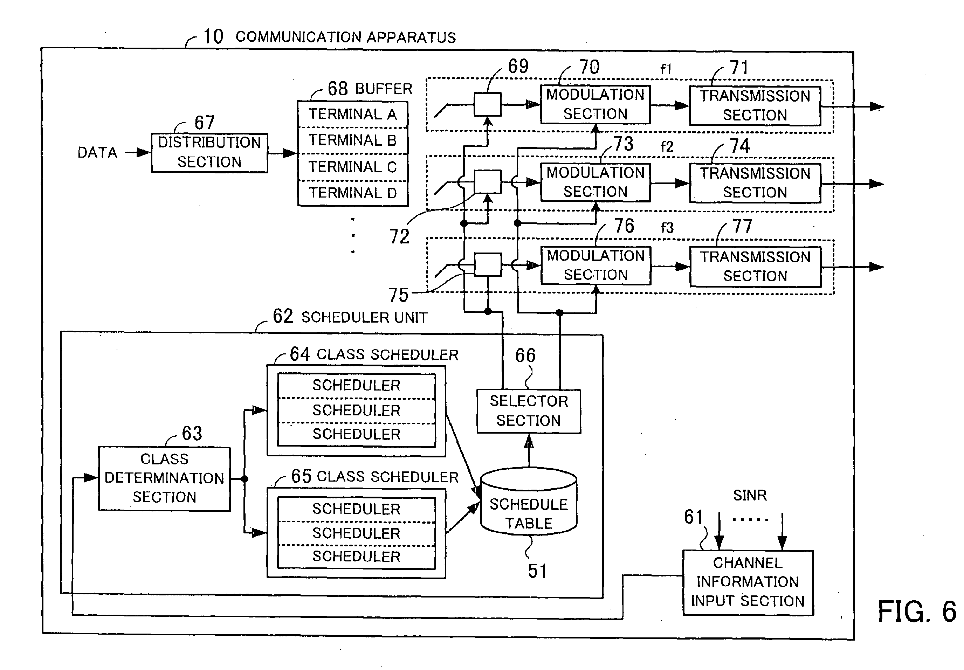

Fig. 6 is a functional block diagram of the communication apparatus. As shown in Fig. 6, the communication apparatus 10 includes a channel information input section 61, a scheduler unit 62, a distribution section 67, a buffer 68, switches 69, 72, and 75, modulation sections 70, 73, and 76, and transmission sections 71, 74, and 77.

Channel information received from a terminal is inputted to the channel information input section 61. It is assumed that an SINR value and the distance between a base station and the terminal are inputted as the channel information.

The scheduler unit 62 determines a frequency band assigned to the terminal. The scheduler unit 62 includes a class determination section 63, class schedulers 64 and 65, a schedule table 51, and a selector section 66.

The class determination section 63 determines on the basis of, for example, the distance between the communication apparatus 10 and the terminal whether the terminal belongs to a class corresponding to an inner area of a cell or a class corresponding to an outer area of the cell. The class determination section 63 outputs an SINR value for the terminal to the class scheduler 64 or 65 on the basis of a determination result.

The class schedulers 64 and 65 included in the scheduler unit 62 correspond to classes. For example, the class scheduler 64 is associated with the class corresponding to the inner area of the cell and the class scheduler 65 is associated with the class corresponding to the outer area of the cell.

Each of the class schedulers 64 and 65 includes schedulers corresponding to frequency bands. For example, if the three frequency bands f1 through f3 exist as described in Figs. 4 and 5, then each of the class schedulers 64 and 65 includes three schedulers corresponding to the frequency bands f1 through f3.

Each of the class schedulers 64 and 65 performs scheduling according to frequency bands in accordance with a schedule algorithm such as the Max CIR or the PF. Each of the class schedulers 64 and 65 generates a schedule table 51 on the basis of scheduling results.

For example, the three schedulers included in the class scheduler 64 perform scheduling on the frequency bands f1 through f3, respectively, of the class C1 described in Figs. 4 and 5 in accordance with the Max CIR. The three schedulers included in the class scheduler 65 perform scheduling on the frequency bands f1 through f3, respectively, of the class C2 described in Figs. 4 and 5 in accordance with the Max CIR. Each of the class schedulers 64 and 65 then generates the schedule table 51.

The schedule table 51 stores the scheduling results. An example of the schedule table 51 is shown in Fig. 5. The schedule table 51 stores the order in each frequency band of individual terminals divided into classes.

The selector section 66 instructs on the basis of the schedule table 51 which buffers (sections or registers) of the buffer 68 the switches 69, 72, and 75 should be connected to. In addition, the selector section 66 changes a modulation technique used by the modulation section 70, 73, or 76.

Data to be sent to a terminal is inputted to the distribution section 67. The distribution section 67 outputs the data inputted to one buffer of the buffer 68 according to the terminal to which the data is to be sent.

The buffer 68 includes a plurality of buffers. For example, the plurality of buffers included in the buffer 68 correspond to terminals A, B, C, D, and so on. For example, if the data is to be sent to the terminal A, then the distribution section 67 outputs the data to a buffer of the buffer 68 corresponding to the terminal A.

The switches 69, 72, and 75 connect the buffer 68 to the modulation sections 70, 73, and 76, respectively, in accordance with instructions from the selector section 66.

The modulation sections 70, 73, and 76 modulate data outputted from the buffer 68. The modulation sections 70, 73, and 76 can set optimum transmission rates based on channel information (SINR values) in accordance with instructions from the selector section 66.

The transmission sections 71, 74, and 77 send data outputted from the modulation sections 70, 73, and 76, respectively, to terminals by radio.

The switch 69, the modulation section 70, and the transmission section 71 make up a processing section for sending data (packets) in the frequency band f1. The switch 72, the modulation section 73, and the transmission section 74 make up a processing section for sending a packet in the frequency band f2. The switch 75, the modulation section 76, and the transmission section 77 make up a processing section for sending a packet in the frequency band f3.

For example, to send data to the terminal A in the frequency band f2, the selector section 66 gives the switch 72 instructions to connect with the buffer of the buffer 68 corresponding to the terminal A. As a result, the data is sent to the terminal A as a packet in the frequency band f2.

The scheduling operation of the communication apparatus 10 will now be described by using a flow chart.

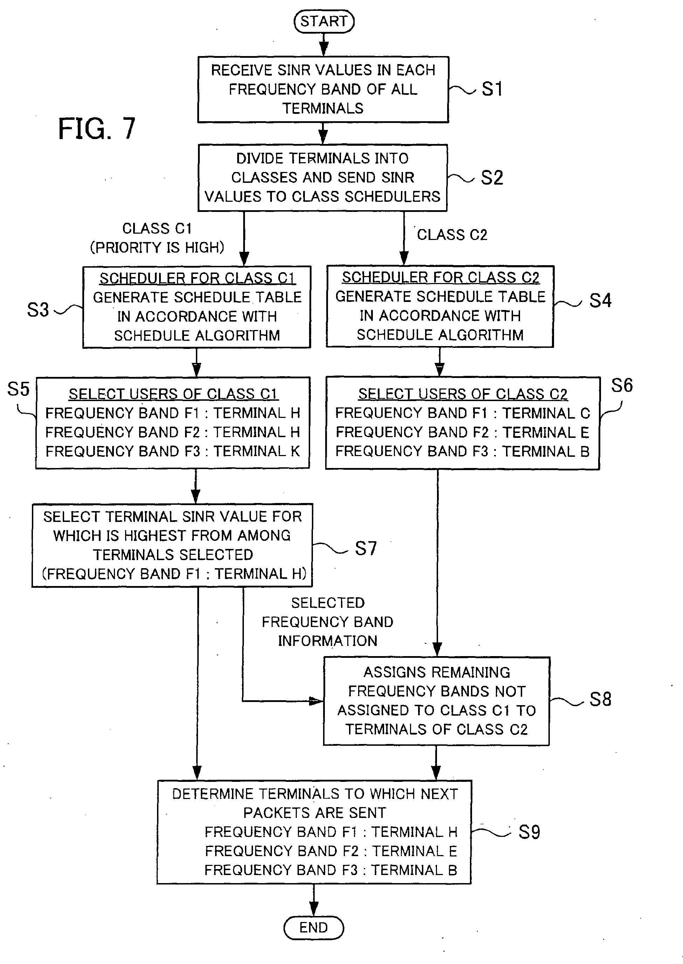

Fig. 7 is a flow chart showing the scheduling operation of the communication apparatus.

[Step S1] The communication apparatus 10 receives SINR values in the frequency bands f1 through f3 from the terminals A through K in the cell 41.

[Step S2] The communication apparatus 10 divides the terminals A through K into classes and sends the SINR values for the terminals A through K to the class schedulers 64 and 65. The terminals A through K are classified on the basis of, for example, the distance to the communication apparatus 10. As described in Fig. 5, the terminals A through F and the terminals G through K belong to the classes C2 and C1 respectively.

[Step S3] The scheduler for the class C1 (class scheduler 64 shown in Fig. 6) included in the communication apparatus 10 performs scheduling according to frequency bands f1 through f3 in accordance with a schedule algorithm such as the Max CIR. As a result, a portion of the schedule table 51 which is shown in Fig. 5 and which corresponds to the inner area is generated.

[Step S4] The scheduler for the class C2 (class scheduler 65 shown in Fig. 6) included in the communication apparatus 10 performs scheduling according to frequency bands f1 through f3 in accordance with a schedule algorithm such as the Max CIR. As a result, a portion of the schedule table 51 which is shown in Fig. 5 and which corresponds to the outer area is generated.

[Step S5] The communication apparatus 10 selects terminals of the class C1 in the frequency bands f1 through f3. For example, in the schedule table 51 shown in Fig. 5, a terminal an SINR value for which is the highest in the frequency band f1 is the terminal H. Accordingly, the communication apparatus 10 selects the terminal H in the frequency band f1. A terminal an SINR value for which is the highest in the frequency band f2 is the terminal H. Accordingly, the communication apparatus 10 selects the terminal H in the frequency band f2. A terminal an SINR value for which is the highest in the frequency band f3 is the terminal K. Accordingly, the communication apparatus 10 selects the terminal K in the frequency band f3.

[Step S6] The communication apparatus 10 selects terminals of the class C2 in the frequency bands f1 through f3. For example, in the schedule table 51 shown in Fig. 5, a terminal an SINR value for which is the highest in the frequency band f1 is the terminal C. Accordingly, the communication apparatus 10 selects the terminal C in the frequency band f1. A terminal an SINR value for which is the highest in the frequency band f2 is the terminal E. Accordingly, the communication apparatus 10 selects the terminal E in the frequency band f2. A terminal an SINR value for which is the highest in the frequency band f3 is the terminal B. Accordingly, the communication apparatus 10 selects the terminal B in the frequency band f3.

[Step S7] The communication apparatus 10 selects a terminal an SINR value for which is the highest from among the terminals H, H, and K selected in the frequency bands f1 through f3 respectively. It is assumed that the SINR value for the terminal H selected in the frequency band f1 is the highest.

[Step S8] The communication apparatus 10 assigns frequency bands not assigned to the class C1 to terminals of the class C2. For example, in step S7 the frequency band f1 is assigned to the terminal H of the class C1. Accordingly, the communication apparatus 10 assigns the frequency bands f2 and f3 to terminals of the class C2. In this case, the communication apparatus 10 assigns the frequency bands f2 and f3 to the terminals E and B respectively.

[Step S9] The communication apparatus 10 determines terminals to which the next packets are sent. In the above example, the communication apparatus 10 determines the assignment of the next packet in the frequency band f1 to the terminal H, the assignment of the next packet in the frequency band f2 to the terminal E, and the assignment of the next packet in the frequency band f3 to the terminal B.

As stated above, the communication apparatus 10 divides the terminals in the cell into the classes and assigns a predetermined number of frequency bands first to terminals of a class the priority of which is high. As a result, in a multi-cell environment, the equality of terminal assignment can be promoted and throughput can be enhanced. In this case, a frequency band used in each cell is not limited.

The priority of the above classes C1 and C2 can be changed according to the traffic condition. By changing the priority of the classes C1 and C2, equality among the terminals A through K can be maintained. In addition, two frequency bands and one frequency band may be assigned to the classes C1 and C2, respectively.

The distribution of the terminals A through K (ratio of terminals in an inner area and an outer area, for example) or the amount of interference from external cells 42 and 43 differs among different cells. In addition, the distribution of the terminals A through K in the cell 41 (ratio of terminals in the inner area and the outer area of the cell 41, for example) or the amount of interference from the external cells 42 and 43 changes with time. Priority or the number of frequency bands can properly be changed with a state in which each of the terminals A through K receives data or the like taken into consideration. In the inner area of the cell 41, it is assumed that the number of terminals temporarily increases and that the amount of data each terminal receives decreases. By assigning one of two frequency bands which were assigned to the outer area to the inner area, an increase in the number of terminals in the inner area can be coped with. After the situation improves, the assignment of the frequency bands is returned to the original state. Environments may differ among the cells 41 through 43. The distribution of the terminals A through K largely depends on the size of the cells 41 through 43 or places where the cells 41 through 43 are located (place where each communication apparatus 10 is located). The distribution of the terminals A through K is influenced by, for example, the positions in a cell of facilities and the like where people gather or whether a terminal which performs high-speed data communication exists. In such a case, flexible handling can be performed by independently setting priority in each cell.

In the above example, the communication apparatus 10 generates the schedule table 51 on the basis of SINR values. When a frequency band is assigned first to a terminal of the class C1 the priority of which is high, the frequency band is assigned to a terminal with the highest SINR value. That is to say, in the above example, the generation of the schedule table 51 and the assignment of a frequency band to a terminal are performed in accordance with the schedule algorithm Max CIR. However, the generation of the schedule table 51 and the assignment of a frequency band to a terminal may be performed in accordance with another schedule algorithm.

For example, the communication apparatus 10 generates the schedule table 51 in accordance with the PF. To be concrete, the communication apparatus 10 calculates the differential between an average SINR value and an instantaneous SINR value in the frequency band f1 for each of the terminals A through F which belong to the class C1. It is assumed that an SINR value is converted to decibels. For example, a PF value in the frequency band f1 for the terminal A is calculated by

$$SINR\_A1-Av[SINR-A]$$

where SINR A1 indicates an instantaneous SINR value in the frequency band f1 for the terminal A and Av[SINR-A] indicates the average of SINR values in the frequency bands f1 through f3 for the terminal A.

After the communication apparatus 10 calculates PF values in the frequency band f1 for the terminals A through F, the communication apparatus 10 determines the order of the terminals A through F in descending order of PF value. Similarly, the communication apparatus 10 calculates PF values in the frequency band f2 for the terminals A through F and determines the order of the terminals A through F in descending order of PF value. In addition, the communication apparatus 10 calculates PF values in the frequency band f3 for the terminals A through F and determines the order of the terminals A through F in descending order of PF value. The communication apparatus 10 performs the same operation on the class C2. As a result, the schedule table 51 can be generated in accordance with the PF algorithm.

Scheduling systems may differ between classes. For example, the Max CIR and the PF may be used in the inner area and the outer area, respectively, of the cell 41. By doing so, throughput can be maximized in the inner area of the cell 41 and equal user assignment can be performed in the outer area of the cell 41.

In the above example, the classification is performed on the basis of the distance between the communication apparatus 10 and a terminal. However, classification may be performed on the basis of the type of traffic (required quality or the amount of data). For example, terminals are divided into two classes on the basis of whether they are voice terminals (telephones) or data transmission terminals. The priority of a class to which data transmission terminals belong is made high and a frequency band in which a great SINR value is obtained is assigned to the class. There will be a large number of voice terminals, so many frequency bands are assigned to a class to which voice terminals belong. Moreover, a detailed classification can be performed. For example, terminals can be divided into voice terminals and data transmission terminals in an inner area of a cell and voice terminals and data transmission terminals in an outer area of the cell.

In addition, sending power may differ between classes.

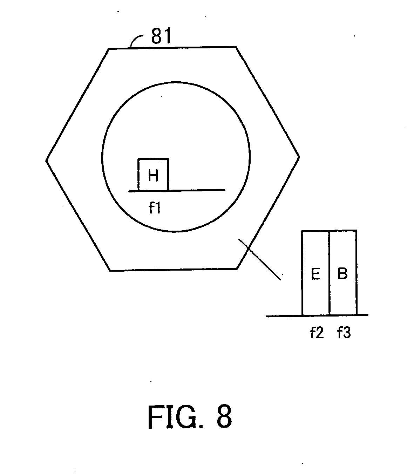

Fig. 8 is a view for describing a change in sending power. As shown in Fig. 8, sending power is low in the frequency band f1 used in an inner area of a cell 81 and is high in the frequency bands f2 and f3 used in an outer area of the cell 81. This system is close to the soft reuse system described in Fig. 12. However, this system differs from the soft reuse system described in Fig. 12 in that the communication apparatus 10 properly changes a frequency band used in each area.

The communication apparatus 10 determines, for example, the average amount of data sent according to classes. If the amount of data is decreasing in the outer area of the cell 81, then sending power is increased. By doing so, a receiving SINR value for a terminal in the outer area can be improved and the amount of data can be increased. Each communication apparatus 10 performs this operation independently of the other communication apparatuses 10.

With the communication apparatus according to the present invention, terminals are divided into classes and a plurality of frequency bands the number of which is determined according to classes are assigned first to terminals of a class the priority of which is high on the basis of channel information. As a result, throughput can be enhanced even in a multi-cell environment by the priority of the classes and the number of frequency bands determined according to classes. In this case, a frequency band which can be used in each cell is not limited.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims.

**Claims**

1. A communication apparatus which assigns a plurality of frequency bands to terminals for performing communication, the apparatus comprising:

   a classification section for dividing the terminals in a cell into classes;
   a channel information receiving section for receiving channel information according to the plurality of frequency bands from the terminals; and
   a scheduling section for assigning the plurality of frequency bands the number of which is determined according to the classes to the terminals in descending order of priority of class on the basis of the channel information.

2. The communication apparatus according to claim 1, wherein the classification section divides the terminals into the classes on the basis of distance between the communication apparatus and each of the terminals.

3. The communication apparatus according to claim 1 or 2, further comprising a number change section for changing the number according to a state in which the communication apparatus communicates with each of the terminals.

4. The communication apparatus according to claim 1, 2 or 3, further comprising a priority change section for changing the priority according to a state in which the communication apparatus communicates with each of the terminals.

5. The communication apparatus according to claim 1, 2, 3, or 4, further comprising a power sending section for changing sending power according to the classes.

6. The communication apparatus according to claim 5, wherein the power sending section changes the sending power on the basis of an average amount of data sent according to the classes.

7. The communication apparatus according to any preceding claim, wherein the scheduling section uses different scheduling systems by which the plurality of frequency bands are assigned in the classes on the basis of the channel information.

8. The communication apparatus according to any preceding claim, wherein the classification section divides the terminals into the classes on the basis of a type of traffic between the communication apparatus and each of the terminals.

9. The communication apparatus according to any preceding claim, wherein the channel information is an SINR value.

10. The communication apparatus according to claim 9, wherein the scheduling section assigns the plurality of frequency bands to the terminals in descending order of the priority of class and SINR value.

**Amended claims in accordance with Rule 86(2) EPC.**

1. A communication apparatus (1) for assigning a plurality of frequency bands (f1,f2,f3) to terminals (2a,2b,2c,2d,2e) for performing communication, the apparatus comprising:

   a classification section (1a) for dividing the terminals (2a,2b,2c,2d,2e) in a cell into classes (C1,2a,2b; C2,2c,2d,2e);
   a channel information receiving section (1b) for receiving channel information according to the plurality of frequency bands (f1,f2,f3) from the terminals (2a,2b,2c,2d,2e); and **characterised by**
   a scheduling section (1c) for assigning the plurality of frequency bands (f1,f2,f3), the number of which is determined according to the classes (C1,2a,2b; C2,2c,2d,2e), to the terminals (2a, 2b,2c,2d,2e) in descending order of priority of class on the basis of the channel information.

2. The communication apparatus (1) according to claim 1, wherein the classification section (1b) divides the terminals (2a,2b,2c,2d,2e) into the classes (C1,2a,2b; C2,2c,2d,2e) on the basis of distance between the communication apparatus (1) and each of the terminals (2a,2b,2c,2d,2e).

**3.** The communication apparatus (1) according to claim 1 or 2, further comprising a number change section for changing the number according to a state in which the communication apparatus (1) communicates with each of the terminals (2a,2b,2c,2d,2e).

**4.** The communication apparatus (1) according to claim 1, 2 or 3, further comprising a priority change section for changing the priority according to a state in which the communication apparatus (1) communicates with each of the terminals (2a,2b,2c,2d,2e).

**5.** The communication apparatus (1) according to claim 1, 2, 3, or 4, further comprising a power sending section for changing sending power according to the classes (C1,2a,2b; C2,2c,2d,2e).

**6.** The communication apparatus (1) according to claim 5, wherein the power sending section changes the sending power on the basis of an average amount of data sent according to the classes (C1,2a, 2b; C2,2c,2d,2e).

**7.** The communication apparatus (1) according to any preceding claim, wherein the scheduling section (1c) uses different scheduling systems by which the plurality of frequency bands (f1,f2,f3) are assigned in the classes (C1,2a,2b; C2,2c,2d,2e) on the basis of the channel information.

**8.** The communication apparatus (1) according to any preceding claim, wherein the classification section (1c) divides the terminals (2a,2b,2c,2d,2e)into the classes (C1,2a,2b; C2,2c,2d,2e) on the basis of a type of traffic between the communication apparatus (1) and each of the terminals (2a,2b,2c,2d,2e).

**9.** The communication apparatus (1) according to any preceding claim, wherein the channel information is an SINR value.

**10.** The communication apparatus (1) according to claim 9, wherein the scheduling section (1c) assigns the plurality of frequency bands (f1,f2,f3) to the terminals (2a,2b,2c,2d,2e) in descending order of the priority of class and SINR value.

1 COMMUNICATION APPARATUS

1a

CLASSIFICATION
SECTION

1b

CHANNEL
INFORMATION
RECEIVING SECTION

SCHEDULING
SECTION

1c

2a

2b

2c

2d

2e

FIG. 1

FIG. 2

FIG. 3

FIG. 4

51

| TERMINAL | | f1 | f2 | f3 |
|---|---|---|---|---|
| OUTER AREA (CLASS C2) | A | 2 | 4 | 4 |
| | B | 3 | 3 | 1 |
| | C | 1 | 6 | 5 |
| | D | 5 | 5 | 3 |
| | E | 4 | 1 | 2 |
| | F | 6 | 2 | 6 |
| INNER AREA (CLASS C1) | G | 4 | 5 | 3 |
| | H | 1 | 1 | 4 |
| | I | 3 | 4 | 5 |
| | J | 2 | 2 | 2 |
| | K | 5 | 3 | 1 |

# FIG. 5

**10** COMMUNICATION APPARATUS

**69**

**68** BUFFER

**70** f1 **71**

MODULATION SECTION | TRANSMISSION SECTION

**67**

DISTRIBUTION SECTION

DATA →

TERMINAL A
TERMINAL B
TERMINAL C
TERMINAL D

**73** f2 **74**

MODULATION SECTION | TRANSMISSION SECTION

**72**

**76** f3 **77**

MODULATION SECTION | TRANSMISSION SECTION

**75**

**62** SCHEDULER UNIT

**64** CLASS SCHEDULER

SCHEDULER
SCHEDULER
SCHEDULER

**66**

SELECTOR SECTION

**63**

CLASS DETERMINATION SECTION

**65** CLASS SCHEDULER

SCHEDULER
SCHEDULER
SCHEDULER

SCHEDULE TABLE

**51**

SINR

**61**

CHANNEL INFORMATION INPUT SECTION

FIG. 6

**FIG. 7**

(START)

↓

| RECEIVE SINR VALUES IN EACH FREQUENCY BAND OF ALL TERMINALS | ∼ S1 |

↓

| DIVIDE TERMINALS INTO CLASSES AND SEND SINR VALUES TO CLASS SCHEDULERS | ∼ S2 |

CLASS C1
(PRIORITY IS HIGH)                    CLASS C2

| SCHEDULER FOR CLASS C1 GENERATE SCHEDULE TABLE IN ACCORDANCE WITH SCHEDULE ALGORITHM | S3 | SCHEDULER FOR CLASS C2 GENERATE SCHEDULE TABLE IN ACCORDANCE WITH SCHEDULE ALGORITHM | ∼ S4 |

↓                                         ↓

| S5 | SELECT USERS OF CLASS C1 FREQUENCY BAND F1 : TERMINAL H FREQUENCY BAND F2 : TERMINAL H FREQUENCY BAND F3 : TERMINAL K | SELECT USERS OF CLASS C2 FREQUENCY BAND F1 : TERMINAL C FREQUENCY BAND F2 : TERMINAL E FREQUENCY BAND F3 : TERMINAL B | S6 |

↓

| SELECT TERMINAL SINR VALUE FOR WHICH IS HIGHEST FROM AMONG TERMINALS SELECTED (FREQUENCY BAND F1 : TERMINAL H) | ∼ S7 |

SELECTED
FREQUENCY BAND
INFORMATION

| ASSIGNS REMAINING FREQUENCY BANDS NOT ASSIGNED TO CLASS C1 TO TERMINALS OF CLASS C2 | ∼ S8 |

| DETERMINE TERMINALS TO WHICH NEXT PACKETS ARE SENT FREQUENCY BAND F1 : TERMINAL H FREQUENCY BAND F2 : TERMINAL E FREQUENCY BAND F3 : TERMINAL B | ∼ S9 |

↓

(END)

81

H

f1

E | B

f2  f3

FIG. 8

BAND 1    BAND 2    BAND 3

FIG. 9A

SUBBAND 1    SUBBAND 2    SUBBAND 3

FIG. 9B

TERMINAL A

TERMINAL B

101

TERMINAL C

FIG. 10A

ONE PACKET

| A | C | A | B |

t

FIG. 10B

FIG. 11

FIG. 12

131
SCHEDULER

132
SCHEDULER

133
SCHEDULER

FIG. 13

European Patent
Office

**EUROPEAN SEARCH REPORT**

Application Number

EP 06 25 2786

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 418 776 A (SAMSUNG ELECTRONICS CO., LTD) 12 May 2004 (2004-05-12) | 1,2 | INV. H04Q7/38 H04L12/56 |
| Y | * paragraph [0007] * * paragraphs [0015] - [0017] * * paragraphs [0028], [0029] * * paragraphs [0030], [0031] * * paragraphs [0043] - [0045] * ----- | 3-10 | |
| X | US 2004/002341 A1 (CHEN TAO) 1 January 2004 (2004-01-01) | 1 | |
| Y | * paragraphs [0010] - [0015] * | 3-10 | |
| A | * paragraphs [0074] - [0077] * * paragraphs [0080] - [0088] * ----- | 2 | |
| X | US 2002/183066 A1 (PANKAJ RAJESH K) 5 December 2002 (2002-12-05) | 1 | |
| A | * paragraphs [0010] - [0015] * * paragraphs [0063] - [0066] * * paragraphs [0073] - [0075] * * paragraph [0078] * * paragraphs [0130] - [0137] * ----- | 2-10 | |
| A | US 2003/021245 A1 (HAUMONTE LUC ET AL) 30 January 2003 (2003-01-30) * paragraphs [0007] - [0015] * * paragraphs [0028] - [0035] * ----- | 1-10 | TECHNICAL FIELDS SEARCHED (IPC) H04L H04Q |

The present search report has been drawn up for all claims

| Place of search | Date of completion of the search | Examiner |
|---|---|---|
| Munich | 18 September 2006 | Mele, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 25 2786

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2006

| Patent document cited in search report | | Publication date | Patent family member(s) | | Publication date |
|---|---|---|---|---|---|
| EP 1418776 | A | 12-05-2004 | CN | 1503486 A | 09-06-2004 |
| | | | JP | 2004159345 A | 03-06-2004 |
| | | | US | 2004097238 A1 | 20-05-2004 |
| US 2004002341 | A1 | 01-01-2004 | AU | 2003261093 A1 | 19-01-2004 |
| | | | CN | 1714547 A | 28-12-2005 |
| | | | EP | 1573960 A2 | 14-09-2005 |
| | | | JP | 2006502608 T | 19-01-2006 |
| | | | WO | 2004004212 A2 | 08-01-2004 |
| US 2002183066 | A1 | 05-12-2002 | BR | PI0208835 A | 21-02-2006 |
| | | | CN | 1568630 A | 19-01-2005 |
| | | | EP | 1378144 A1 | 07-01-2004 |
| | | | JP | 2004533750 T | 04-11-2004 |
| | | | TW | 230556 B | 01-04-2005 |
| | | | WO | 02085061 A1 | 24-10-2002 |
| US 2003021245 | A1 | 30-01-2003 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEILL355838 A

**Non-patent literature cited in the description**

- **SHIRAKABE et al.** Evaluation of Concatenated Scheduling for CDMA System. *The Institute of Electronics, Information and Communication Engineers (IEICE) Communications Society Conference 2005,* vol. B-5-99

- **SHIRAKABE et al.** Evaluation of Concatenated Scheduling for CDMA System. *IEICE Communications Society Conference 2005,* vol. B-5-99